# FASCICULE DE BREVET EUROPEEN

(11) **EP 3 367 649 B1**
(45) Date de publication et mention de la délivrance du brevet: **14.04.2021**
(21) Numéro de dépôt: 18158628.0
(22) Date de dépôt: 26.02.2018
(51) Int. Cl.: H04M 1/725

(54) **PROCÉDÉ DE COUPLAGE ÉLECTRONIQUE D'UN TERMINAL MOBILE AVEC UN LOGEMENT CONFIGURÉ POUR RECEVOIR LE TERMINAL MOBILE, DISPOSITIF ET LOGEMENT ASSOCIÉS**
ELEKTRONISCHES KUPPLUNGSVERFAHREN EINES MOBILEN ENDGERÄTS MIT EINEM GEHÄUSE, DAS FÜR DIE AUFNAHME EINES MOBILEN ENDGERÄTS KONFIGURIERT IST, ENTSPRECHENDE VORRICHTUNG UND ENTSPRECHENDES GEHÄUSE
A METHOD FOR ELECTRONICALLY COUPLING A MOBILE TERMINAL WITH A HOUSING CONFIGURED TO RECEIVE THE MOBILE TERMINAL, RELATED DEVICE AND HOUSING

(30) Priorité: 28.02.2017 FR 1700196
(43) Date de publication de la demande: 29.08.2018
(73) Titulaire: THALES, 92400 Courbevoie (FR)
(72) Inventeur: PAU, Vydian, 92622 GENNEVILLIERS CEDEX (FR); DELATTRE, Michel, 92622 GENNEVILLIERS CEDEX (FR)
(74) Mandataire: Lavoix

(56) Documents cités:
- EP-A1- 2 175 565
- WO-A1-2014/019122
- DE-A1-102014 007 999
- US-A1- 2009 310 580
- US-A1- 2013 231 100

## Description

La présente invention concerne un procédé de couplage électronique d'un terminal mobile avec un logement configuré pour recevoir ledit terminal mobile.

L'invention concerne également un dispositif de couplage électronique d'un terminal mobile avec un logement configuré pour recevoir ledit terminal mobile.

L'invention concerne également un logement configuré pour recevoir un terminal mobile. Dans ce contexte il est fait référence aux documents d'art antérieur suivant: US 2009/310580 A1, DE 10 2014 007999 A1 et WO 2014/019122 A1.

L'invention concerne le domaine des télécommunications en général et plus particulièrement le domaine de la sécurité de l'information en particulier lors de la mise en œuvre d'opérations de sûreté ou de surveillance.

Pour ces opérations, il est exigé de hauts niveaux d'assurance dans la sûreté de fonctionnement et la sécurité informatique, ce qui a conduit à des architectures de communications, également appelées architectures MILS (de l'anglais *Multiple Indépendant Levels of Security*) où des sous-ensembles de ressources matérielles et logicielles sont strictement séparées et où le flux de communication est contrôlé voire chiffré. De telles architectures requièrent, en fonction des missions, des investissements lourds et sont développées selon un cycle de vie qui leur est propre.

En parallèle, l'usage professionnel de terminaux mobiles a évolué de sorte à suivre les évolutions des terminaux mobiles sans fil fabriqués en série (COTS de l'anglais *Commercial Off-the-shelf*) pour usage personnel. En effet, les terminaux mobiles présentent des cycles de vie de plus en plus courts par rapport aux infrastructures radio, notamment du fait des améliorations permanentes en termes d'ergonomie et du fait de l'amélioration continue de l'efficacité de l'interaction Homme-Machine.

L'utilisation des terminaux personnels (BYOD de l'anglais *Bring Your Own Device*) dans le cadre d'activités professionnelles s'est donc développée. Pour pallier les éventuelles failles de sécurité introduites par l'utilisation de terminaux personnels dans un cadre professionnel, des approches de gestion matérielle ont été introduites, par exemple l'approche COPE (de l'anglais *Corporate Owned Personnaly Enabled*) permettant de contrôler (notamment au moyen d'un démarrage sécurisé (de l'anglais *Secure Boot*)) et d'administrer les terminaux COTS fournis par une entreprise, en conformité avec la politique informatique de cette entreprise (MDM en anglais *Mobile Device Manage*) tout en autorisant un usage personnel.

Cependant, ces approches de gestion matérielle de terminaux mobiles COTS fournis par les entreprises sont mises en œuvre de manière centralisée, ce qui laisse peu d'autonomie aux utilisateurs, et ne permet pas une adaptation locale des règles de sécurité à des situations singulières et/ou éphémères.

Le but de l'invention est alors de proposer un procédé de communication pour terminal mobile à usage professionnel comme personnel qui soit plus autonome en termes de sécurité de radiocommunication tout en optimisant l'ergonomie d'utilisation et en personnalisant l'utilisation sans pour autant déroger à la politique de sécurité à appliquer.

A cet effet, l'invention est telle que présentée dans les revendications indépendantes 1 et 6, les formes préférées étant présentées dans les revendications dépendantes 2 à 5 et 7 à 9.

Le procédé de couplage électronique selon l'invention permet alors de dissocier d'une part l'utilisation, par exemple professionnelle, et le cycle de vie du logement configuré pour recevoir un terminal mobile, et d'autre part l'utilisation, par exemple personnelle, et le cycle de vie du terminal mobile en tant que tel.

Ces deux éléments, à savoir le terminal mobile et le logement, forment, une fois solidarisés, un nouvel objet communicant conformément à des règles de communication prédéterminées et associées au deuxième module de radiocommunication, par inhibition du premier module de radiocommunication du terminal mobile dédié à un premier usage (par exemple personnel), et par activation du deuxième module de radiocommunication, intégré dans le logement dédié à un deuxième usage (par exemple professionnel) distinct du premier usage.

Par la suite, par « logement », on entend une « coque », un « boîtier » destiné à accueillir un terminal mobile.

Autrement dit, le procédé de couplage selon l'invention permet au logement de communiquer selon un mode sécurisé tout en tirant profit de l'ergonomie d'utilisation et de l'interface homme-machine du terminal mobile 12 auquel il est solidarisé pendant le couplage.

Suivant d'autres aspects avantageux de l'invention, le procédé de couplage électronique comprend une ou plusieurs des caractéristiques suivantes, prises isolément ou suivant toutes les combinaisons techniquement possibles :
- le procédé comprend en outre :
- la sauvegarde, dans un premier espace mémoire dédié du dispositif de couplage électronique, d'au moins une information représentative de la configuration du terminal mobile préalablement à l'inhibition;
- l'émission d'au moins une commande de suppression de toute information mémorisée par le terminal mobile pendant la durée de solidarisation du terminal mobile au le logement ;
et préalablement à la désolidarisation du terminal mobile et du logement :
- le chargement, par le dispositif de couplage électronique, de ladite information représentative de la configuration du terminal mobile, préalablement à l'inhibition, sur le terminal mobile, et
- la désactivation du deuxième module de radiocommunication ;
- l'activation du fonctionnement du deuxième module de radiocommunication est conditionnée par la réception et la vérification d'au moins une donnée d'authentification de l'utilisateur saisie via une interface de saisie du terminal mobile ;
- le procédé de couplage comprend en outre, préalablement à l'activation du deuxième module de radiocommunication, le chargement, sur le terminal mobile, par le dispositif de couplage électronique, d'au moins un outil logiciel configuré pour :
- contrôler des données d'entrées et de sortie du terminal mobile pendant l'activation du deuxième module de radiocommunication, et/ou
- contrôler l'intégrité du terminal mobile, et/ou
- détecter une désolidarisation du terminal mobile et du logement;
- l'activation du deuxième module de radiocommunication comprend l'activation d'un mode de communication spécifique sélectionné en fonction d'au moins un paramètre représentatif d'une utilisation prédéterminée du deuxième module de radiocommunication, ledit au moins un paramètre étant préalablement stocké dans un deuxième espace mémoire dédié et sécurisé accessible par le dispositif de couplage électronique ;
- dans lequel le procédé de couplage comprend en outre la restitution initiée par le dispositif de couplage électronique, via un module de restitution du terminal mobile, d'une information représentative de l'activation du deuxième module de radiocommunication.

L'invention a également pour objet un dispositif de couplage électronique d'un terminal mobile avec un logement configuré pour recevoir ledit terminal mobile, le terminal mobile comprenant un premier module de radiocommunication et le logement comprenant un deuxième module de radiocommunication, ledit dispositif étant configuré pour mettre en œuvre le procédé de couplage électronique selon l'invention.

L'invention a également pour objet un logement configuré pour recevoir un terminal mobile, comprenant au moins un module de radiocommunication et le dispositif de couplage électronique précité.

En d'autres termes, la présente invention porte sur un logement (ou coque) communicant(e) propre à être solidarisé(e) à un terminal mobile, dont il inhibe le module de communication tout en tirant profit de son ergonomie et de son interface homme-machine lorsqu'il y est solidarisé.

Suivant d'autres aspects :
- le module de radiocommunication du logement est un module de radiocommunication sécurisée ;
- le logement comprend en outre un écran de protection électromagnétique propre à s'étendre au moins sur la plus grande surface d'accueil du terminal mobile ;
- le logement est formé par un matériau obtenu par plasturgie nano-renforcée.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique du couplage (i.e. assemblage) d'une terminal mobile avec un logement configuré pour recevoir ce terminal mobile ;
- la figure 2 est une représentation schématique de la couche électronique du logement configuré pour recevoir ce terminal mobile selon l'invention ;
- la figure 3 est une représentation schématique du dispositif de couplage intégré au sein de la couche électronique du logement selon l'invention ;
- la figure 4 est un organigramme d'un procédé de couplage électronique selon l'invention.

De façon conventionnelle dans la présente demande, les expressions « sensiblement égal à » et « environ » exprimeront chacune une relation d'égalité à plus ou moins 10 %.

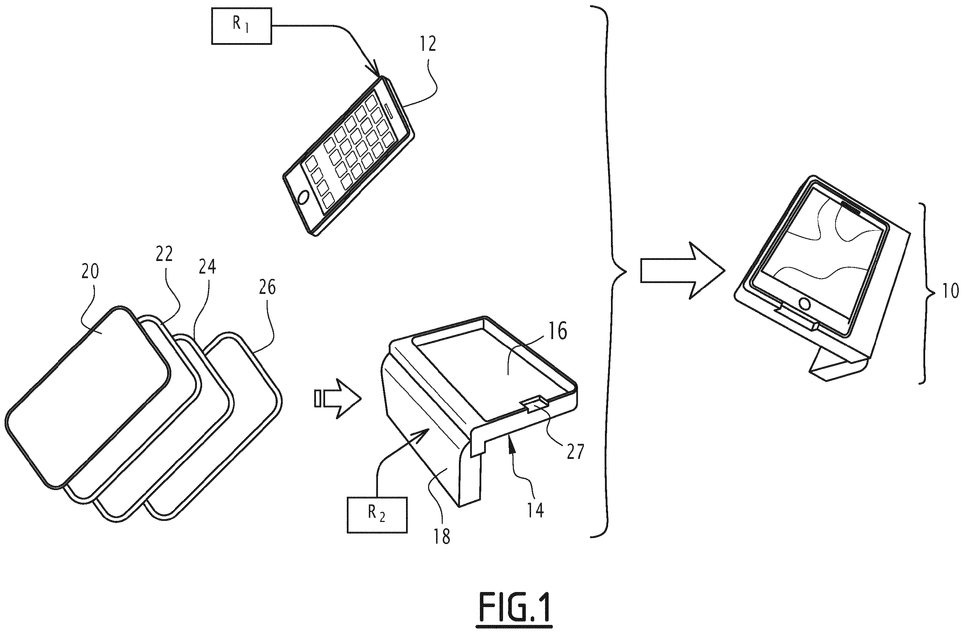

Sur la figure 1, l'assemblage 10 du terminal mobile 12 et du logement 14 configuré pour le recevoir est représenté. En d'autre termes, un nouvel objet communicant 10 est obtenu par couplage du terminal mobile 12 avec le logement 14.

Le terminal mobile 12 est fabriqués en série (COTS de l'anglais *Commercial Off-the-shelf*), et par exemple, un ordiphone (de l'anglais *smartphone*) géré par un système d'exploitation, tel que le système d'exploitation Android de la société Google®, ou selon un autre exemple, une tablette tactile. Le terminal mobile 12 comprend un premier module de radiocommunication R₁. Un tel module de radiocommunication comprend par exemple une antenne radioélectrique et un émetteur-récepteur radioélectrique (non représentés). L'émetteur-récepteur du terminal mobile 12 est connecté à une unité de traitement d'informations (non représentée) formée par exemple d'un premier processeur, et d'une première mémoire associée au premier processeur.

Par ailleurs, un tel terminal mobile 12 comprend un clavier, un écran (par exemple un écran tactile), et, par exemple, un appareil photo numérique (non représenté).

Le logement 14 comprend une cavité 16 destinée à recevoir et protéger au moins deux faces du terminal mobile 12 pour former le nouvel objet communicant 10 issu du couplage du terminal mobile 12 et du logement 14. En d'autres termes, la hauteur de la cavité 16 est sensiblement égale à l'épaisseur du terminal mobile 12.

Par ailleurs, le logement 14 comprend également une partie communicante 18 comprenant notamment un deuxième module de radiocommunication R₂. En d'autres termes, le logement 14 est une coque intelligente.

Préférentiellement et par la suite, le deuxième module de radiocommunication R₂ est un module de radiocommunication sécurisée. En d'autres termes, les données échangées via le deuxième module de radiocommunication R₂ sont inviolables et traitées selon des règles de sécurité d'information prédéterminées.

Selon un aspect particulier, tel que représenté sur la figure 1, la partie communicante 18 et la cavité 16 sont solidarisées selon une longueur du logement de sorte que le logement présente une forme en L.

Le logement 14 présente par exemple une architecture fonctionnelle (i.e. logicielle et matérielle) en couches dédiées réparties au sein de la cavité et/ou au sein de la partie communicante 18. Sur l'exemple de la figure 1, l'architecture est, par exemple, formée de quatre couches 20, 22, 24 et 26.

La première couche 20 est par exemple configurée pour jouer le rôle d'un écran de protection électromagnétique des radiocommunications de l'objet communicant 10 issu du couplage du terminal mobile 12 et du logement 14.

Pour ce faire, cette première couche 20 est par exemple formée d'un plan métallique (de l'anglais *shield*) propre à s'étendre au moins sur la plus grande surface d'accueil, voire sur les quatre côtés de la cavité de la cavité 16 du logement 14 pour recevoir le terminal mobile 12. Un tel plan métallique est propre à protéger, telle une cage de faraday, le deuxième module de radiocommunication sécurisée R₂ des nuisances électriques et subsidiairement électromagnétiques produites par le premier module de radiocommunication R₁ du terminal mobile 12. En d'autres termes, l'écran 20 de protection électromagnétique est configuré pour inhiber, brouiller, mettre en quarantaine, ou encore dégrader les communications émises par le premier module de radiocommunication R₁ du terminal mobile 12 tout en permettant au deuxième module de radiocommunication sécurisée R₂ d'émettre correctement.

Selon une variante, non représentée, la partie communicante 18 et la cavité 16 sont empilées verticalement de sorte que :
- l'écran 20 de protection électromagnétique est placé sous la cavité 16, et par conséquent sous le premier module de radiocommunication R₁ du terminal mobile 12 dont l'écran de protection dégrade, voire inhibe, la capacité de communication, et
- le deuxième module de radiocommunication sécurisée R₂ du logement 14 est localisé à l'extérieur de la protection électromagnétique conférée par l'écran 20 de protection électromagnétique 20, si bien que la capacité de communication du deuxième module de radiocommunication sécurisée R₂ n'est pas altérée.

La partie communicante 18 comprend au moins une couche logicielle et matérielle (i.e. fonctionnelle) dédiée 22 à l'aspect purement électronique du module de radiocommunication sécurisée R₂, tandis que la couche logicielle et matérielle (i.e. fonctionnelle) 24 est dédiée à l'aspect antennaire, et plus particulièrement à une ou plusieurs antenne(s) multibande(s). La couche logicielle et matérielle (i.e. fonctionnelle) 26 est quant à elle dédiée à l'alimentation énergétique, par exemple sous forme de batterie.

Selon une autre variante non représentée, le logement forme une enveloppe de sorte à recouvrir partiellement ou totalement chaque face du terminal mobile 12. Selon cette autre variante, l'agencement des couches 20, 22, 24 et 26 est également configuré de sorte à dégrader ou inhiber le fonctionnement du premier module de radiocommunication R₁ du terminal mobile 12 tout en permettant au deuxième module de radiocommunication sécurisée R₂ du logement 14 de fonctionner correctement.

Le logement 14 est formé par un matériau obtenu par plasturgie nano-renforcée. Par exemple, le matériau utilisé pour former le logement 14 est un polyamide chargé de noir de carbone.

Pour former le logement 14 complètement idoine (i.e. un logement parfaitement adapté aux dimensions du terminal mobile 12), une impression tridimensionnelle (3D) est par exemple utilisée. Ainsi, le logement 14 selon la présente invention est propre à être produit sous différentes tailles et/ou formes (i.e. polymorphe : propre à loger différents types (i.e. modèles) de terminaux mobiles 12).

Sur la figure 1, le logement 14 présente également une encoche 27 facilitant l'insertion ou l'enlèvement du terminal mobile 12 dans la cavité 16 du logement 14.

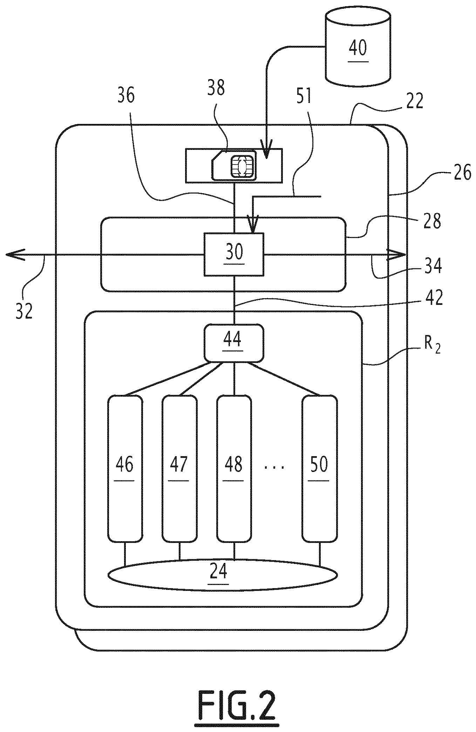

Les éléments électroniques de la couche logicielle 22 sont à présent décrits à l'aide de la figure 2.

Structurellement, la couche logicielle et matérielle (i.e. fonctionnelle) 22 comprend notamment une pluralité d'étages électroniques dédiés et distincts.

Un premier étage 28 électronique est un étage d'hypervision. L'hyperviseur 28 est une plate-forme de virtualisation permettant à plusieurs systèmes d'exploitation de travailler sur une même machine physique en même temps à savoir le logement 14 ou préférentiellement l'objet communicant 10 correspondant au couplage du terminal mobile 12 avec le logement 14. En d'autres termes, l'hyperviseur 28 agit tel un processeur gestionnaire du fonctionnement électronique du logement 14 (i.e. de la coque).

L'hyperviseur 28 est, par exemple, de type PikeOS de SYSGO AG® présentant au moins la certification de niveau EAL5+.

Selon la présente invention, l'hyperviseur 28 contrôle un dispositif 30 de couplage électronique configuré pour coupler électroniquement le terminal mobile 12 et le logement 14 une fois que ces deux éléments sont solidarisés mécaniquement et/ou électriquement, et en particulier pour coupler leurs modules de radiocommunication R₁ et R₂ respectifs.

La solidarisation mécanique et/ou électrique du terminal mobile 12 et du logement 14 consiste à insérer le terminal mobile 12 dans la cavité 16 du logement 14 prévue à cet effet, et le cas échéant de connecter le terminal mobile 12 au logement 14 au moyen d'une liaison filaire, par exemple une liaison 32 USB (de l'anglais *Universal Serial Bus*).

Pour ce faire, le logement 14 présente par exemple un connecteur USB (non représenté) localisé dans la cavité 16 de sorte à venir en prise avec le connecteur USB du terminal mobile 12.

Par la suite, par « USB » on entend les différentes versions d'USB propres à être mises en œuvre selon le type de terminal mobile 12 utilisé à savoir USB 1.0, USB 1.1, USB 2. 0, USB 3.0, USB 3.1, etc.

Une telle liaison 32 entre le logement 14 et le terminal mobile est détectée par l'hyperviseur 28 ce qui active le dispositif de couplage électronique 30.

En variante, la liaison 32 est une liaison électrique et le logement 14 comme le terminal mobile 12 comprennent respectivement une zone de contact électrique (non représentée), de sorte que l'insertion du terminal mobile 12 dans le logement 14 permet d'établir un contact électrique (i.e. de fermer un circuit électrique auparavant en état de circuit ouvert) entre la zone de contact électrique du logement 14 et la zone de contact électrique du terminal 12.

Le contact électrique ainsi établi lors de la solidarisation du terminal 12 au logement 14, permet d'activer le dispositif de couplage électronique 30.

Le dispositif de couplage électronique 30 est par ailleurs connecté par une liaison 34 à la batterie 26.

De plus, le dispositif de couplage électronique 30 de l'hyperviseur 28 présente une interface 36 avec un dispositif 38 de sécurité géré par un tiers de confiance 40, par exemple un opérateur de radiocommunication et/ou un fournisseur de service.

Un tel dispositif de sécurité 38 est par exemple une puce, contenant un microcontrôleur et de la mémoire. Une telle puce correspond, par exemple, à une carte UICC (de l'anglais *UMTS Integrated Circuit Card*) aussi appelée carte SIM (de l'anglais *Subscriber Identity Module*) ou encore une carte USIM (de l'anglais *Universal Subscriber Identity Module*)*.*

En particulier, le dispositif de sécurité 38 est configuré pour sécuriser les radiocommunications émises par le deuxième module radiocommunication sécurisée R₂ du logement 14 conformément à des règles et services de sécurisation définis par le tiers de confiance 40.

Par exemple, le dispositif de sécurité 38 permet l'accès au service Eiji, du tiers de confiance 40 correspondant à la société Thales®, qui offre une solution de communication haut-débit, résiliente et sécurisée permettant d'opérer et d'échanger en toute sécurité dans un contexte de menaces multiples.

Via un tel service Eiji, le tiers de confiance 40 est notamment propre à charger, en fonction de la mission ou du profil de l'utilisateur du logement 14 et du terminal mobile 12, dans le dispositif de sécurité 38 au moins un paramètre représentatif d'une utilisation prédéterminée du deuxième module de radiocommunication sécurisée R₂.

Le dispositif de couplage électronique 30 présente également une interface 42 d'échange avec le deuxième module de radiocommunication sécurisée R₂ du logement 14.

Un tel deuxième module de radiocommunication sécurisée R₂ est intégré dans un deuxième étage électronique dédié du logement 14. Le deuxième module de radiocommunication sécurisée R₂ comprend un module 44 administrateur radio (de l'anglais *waveform manager*) propre à communiquer des données selon un mode de communication spécifique sélectionné parmi une pluralité de modes de communication disponibles correspondant respectivement à la mise en œuvre de normes spécifiques et/ou à l'utilisation de bandes de fréquences dédiées et sécurisées.

Pour mettre en œuvre une telle sélection le module 44 administrateur radio est contrôlé, via l'interface 42, par le dispositif de couplage électronique 30.

Pour transmettre des données conformes à chaque mode de communication, le module de radiocommunication sécurisée R₂ comprend en effet différents types d'émetteurs-récepteurs dédiés 46, 47, 48, 50 de radiocommunication sécurisées.

Par exemple, le module de radiocommunication sécurisée R₂ est configuré pour fournir un accès sécurisé à un réseau LTE et comprend pour ce faire une émetteur-récepteur 46 LTE sécurisé, par exemple du type TWS8100 développé par la société Thales®.

Sur la figure 2, le module de radiocommunication sécurisée R₂ est également configuré pour fournir, selon un autre exemple, un accès sécurisé à un réseau ultra haute fréquence UHF via un émetteur-récepteur dédié 47 de type radio logicielle SDR (de l'anglais *Software Defined Radio*) et sécurisé selon standard CNR (de l'anglais *Combat Net Radio).*

Le module de radiocommunication sécurisée R₂ comprend également, selon un autre exemple, un émetteur-récepteur 48 propre à échanger des données de manière sécurisée selon standard CNR (de l'anglais *Combat Net Radio*) conformément à la norme Bluetooth®.

Le deuxième module de radiocommunication sécurisée R₂ comprend également d'autres types 50 d'émetteurs-récepteurs sélectionnés par le module administrateur radio 44, lui-même contrôlé par le dispositif de couplage 30 selon l'invention.

Le dispositif de couplage 30 est en effet configuré pour lire dans la mémoire du dispositif de sécurité 38 au moins un paramètre représentatif d'une utilisation prédéterminée (i.e. mission) du deuxième module de radiocommunication sécurisée R₂. Un tel paramètre permet la sélection de l'émetteur-récepteur du deuxième module de radiocommunication sécurisée R₂ adapté pour le mode de communication spécifique correspondant à la mission de l'utilisateur de l'objet communicant 10 issu du couplage du terminal mobile 12 et du logement 14.

Chacun des différents émetteurs-récepteurs du deuxième module de radiocommunication sécurisée R₂ est connectable à la couche logicielle et matérielle (i.e. fonctionnelle) 24 dédiée à l'aspect antennaire, comprenant une ou plusieurs antenne(s) multibande(s) sélectionnées, de la même manière que le type d'émetteur-récepteur, en fonction du mode de communication spécifique associé à la mission courante de l'utilisateur.

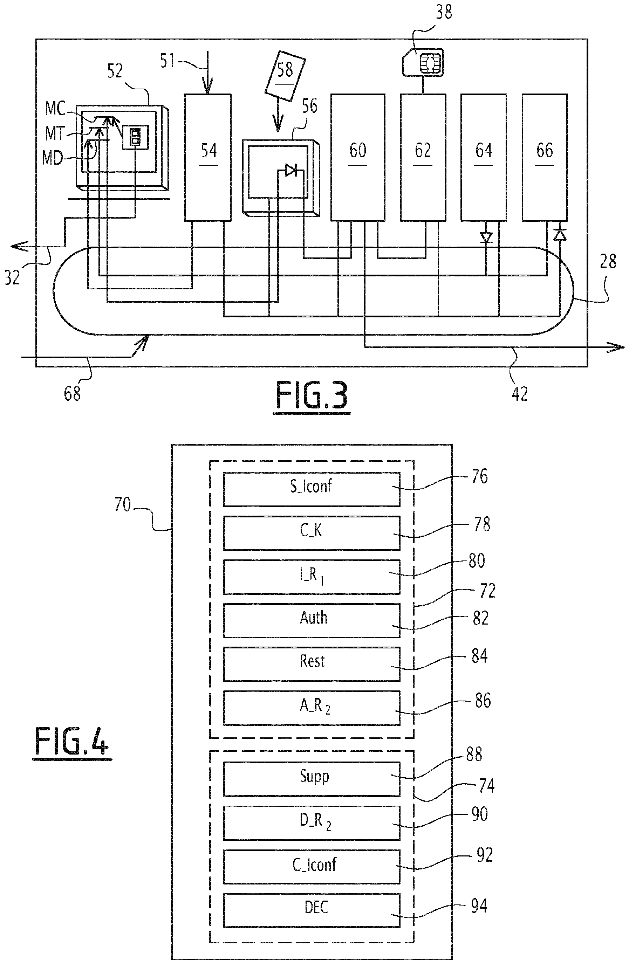

La structure du dispositif de couplage électronique 30 selon l'invention est à présent décrite à l'aide de la figure 3.

Selon l'exemple de la figure 3, le dispositif de couplage électronique 30 comprend tout d'abord un commutateur 52 de mode de fonctionnement du logement 14.

Un tel commutateur 52 est configuré pour détecter l'établissement de la liaison filaire 32 (i.e. du contact électrique ou de la liaison USB) entre le terminal mobile 12 et le logement 14 et déclencher respectivement, en fonction du résultat positif ou négatif de cette détection, un mode de fonctionnement « couplé » MC du logement 14 et un mode de fonctionnement « découplé » MD du logement 14, voire un mode de fonctionnement MT de transition entre le mode fonctionnement couplé et le mode de fonctionnement découplé. De plus, le commutateur 52 permet d'établir, pour le mode de fonctionnement « couplé » MC, un chemin physique, exclusif des autres chemins physiques associés aux autres modes de fonctionnement, entre le terminal mobile 12 et un espace mémoire du logement 14, dédié au stockage d'au moins une information représentative de la configuration du terminal mobile 12 préalablement au couplage électronique avec le logement 14.

Le dispositif de couplage électronique 30 comprend en outre un module 54 de gestion des modes de fonctionnement découplé MD, couplé MC, et MT de transition du logement 14

Lors de la solidarisation du terminal mobile 12 au logement 14 (i.e. le commutateur détecte l'établissement de la liaison filaire 32), un tel module 54 de gestion de modes de fonctionnement, est propre à gérer la réception d'une interruption non masquable NMI 51 (de l'anglais Non-Maskable Interrupt) générée automatiquement par le commutateur 52 pour passer du mode découplé MD (en passant par le mode transition MT) au mode couplé MC tel que représentée sur la figure 3.

Inversement, lors de la désolidarisation (intempestive ou en fin de mission) du terminal mobile 12 au logement 14 (i.e. le commutateur détecte la rupture de la liaison filaire 32), un tel module 54 de gestion de modes de fonctionnement, est propre à gérer la réception d'une interruption non masquable NMI 51 générée automatiquement par le commutateur 52 pour passer du mode couplé MC (en passant par le mode transition MT) au mode découplé MD.

Le module 54 de gestion des modes de fonctionnement est également propre à être connecté aux modules 56, 60, 62, 64 et 66 suivants du dispositif de couplage électronique 30 tels que décrits ci-après.

Le dispositif de couplage électronique 30 comprend également un module 56 comprenant notamment au moins une ou plusieurs diode(s) dont l'état bloquant ou passant est configuré pour bloquer ou laisser passer le signal sortant d'un filtre 58 appliqué à un flux de radiocommunication reçu par le deuxième module de radiocommunication sécurisée R₂ Un tel filtre permet de protéger le deuxième module de radiocommunication sécurisée R₂ du logement 14 des éventuels flux de communication associés au terminal mobile 12.

Le dispositif de couplage électronique 30 comprend en outre un premier contrôleur 60 des services de télécommunications auquel le deuxième module de radiocommunication sécurisée R₂ est autorisé à accéder. Un tel contrôleur de service 60 fournit des fonctionnalités permettant d'accéder, avec résilience, à des réseaux sécurisés par transmission multi-chemin, notamment en appliquant un protocole de communication sécurisé IPSEC (de l'anglais *Internet Protocol Security*).

Le dispositif de couplage électronique 30 comprend également un deuxième contrôleur 62 connecté au dispositif de sécurité 38 de sorte à appliquer les règles de sécurité associées au mode de communication spécifique défini par le tiers de confiance 40.

Le dispositif de couplage électronique 30 comprend également au moins deux espaces mémoires 64 et 66 dédiés et isolés les uns des autres.

Un espace mémoire 64 est, par exemple, dédié au stockage d'un outil logiciel (micro noyau de système d'exploitation (de l'anglais *micro kernel*)) configuré pour être chargé dans la mémoire du terminal mobile 12:
- contrôler des données d'entrées et de sortie du terminal mobile 12 pendant l'activation du deuxième module de radiocommunication sécurisée R₂, et/ou
- contrôler l'intégrité du terminal mobile 12, et/ou
- détecter une désolidarisation du terminal mobile 12 et du logement 14.

L'autre espace mémoire 66 est, par exemple, dédié au stockage d'au moins une information représentative de la configuration du terminal mobile 12 préalablement au couplage électronique avec le logement 14, et donc préalablement à l'inhibition du premier module de radiocommunication R₁ du terminal mobile 12.

Selon un aspect, non représenté, l'espace mémoire 66 est configuré pour empêcher la désolidarisation du logement 14 et du terminal mobile 12 tant qu'il n'est pas d'abord vidé pour recharger cette information représentative de la configuration du terminal mobile préalablement à la désolidarisation tel que décrit ci-après en relation avec la description du fonctionnement du dispositif de couplage 30.

Optionnellement, le dispositif de couplage comprend un module d'authentification, non représenté, propre à être connecté via la liaison 32 à l'interface homme-machine (i.e. interface de saisie et de restitution) du terminal mobile 12 lorsque le terminal mobile 12 est solidarisé au logement 14. Un tel module d'authentification est propre à émettre une requête d'authentification restituée via ladite interface à l'utilisateur du terminal mobile 12.

L'hyperviseur 28 contrôle l'ensemble des modules constitutifs du dispositif 30 de couplage électronique conformément à une architecture 68 MILS (de l'anglais *Multiple Indépendant Levels of Security*) où des sous-ensembles de ressources matérielles et logicielles sont strictement séparées et où le flux de communication est contrôlé voire chiffré.

Le fonctionnement du dispositif de couplage électronique 30 selon l'invention va désormais être décrit à l'aide de la figure 4 représentant un organigramme du procédé 70 selon l'invention de couplage électronique d'un terminal mobile 12 avec un logement 14 configuré pour recevoir ledit terminal mobile.

Le procédé 70 comprend notamment deux phases, à savoir une première phase 72 de préparation au couplage et une deuxième phase 74 de préparation au découplage électronique entre le terminal mobile 12 et le logement 14. Chacune de ces phases 72 et 74 comprend un ensemble d'étapes mises en œuvre automatiquement par le dispositif de couplage électronique 30 selon l'invention.

La première phase 72 de préparation au couplage comprend tout d'abord selon l'exemple représenté sur la figure 4, une étape 76 de sauvegarde, dans un premier espace mémoire 66 dédié du dispositif de couplage électronique, d'au moins une information représentative de la configuration du terminal mobile préalablement à l'inhibition du premier module de radiocommunication R₁ du terminal mobile 12

Une telle étape 76 est notamment déclenchée une fois que le commutateur 52 a détecté l'établissement de la liaison 32 entre le logement 14 et le terminal 12. En d'autres termes, au cours de cette étape les informations courantes contenues dans la mémoire du terminal mobile 12 sont sauvegardées dans l'emplacement mémoire 66 du logement 14 (i.e. de la coque), cet emplacement mémoire 66 est isolé des autres emplacements par l'intermédiaire de l'hyperviseur 28 du logement 14 qui est un logiciel de sécurité dédié (PikeOS®).

Lors de l'étape suivante 78, le dispositif de couplage électronique 30 met en œuvre le chargement, sur le terminal mobile 12, d'au moins un outil logiciel (kernel) configuré pour :
- contrôler des données d'entrées et de sortie du terminal mobile pendant l'activation du deuxième module de radiocommunication sécurisée, et/ou
- contrôler l'intégrité du terminal mobile, et/ou
- détecter une désolidarisation du terminal mobile et du logement.

En d'autres termes, la coque 14 charge dans le terminal mobile 12 un ensemble de logiciels (kernel) qui d'une part est configuré pour invalider le premier module de radiocommunication R₁ du terminal mobile 12 et d'autre part est configuré pour surveiller la déconnexion intempestive (intentionnelle ou accidentelle) du terminal de la coque 14.

Une fois ce chargement 78 effectué, l'étape 80 d'inhibition du fonctionnement du premier module de radiocommunication R₁ est mise en œuvre.

En fonction du type de terminal mobile 12, il est possible que l'action de l'ensemble de logiciels (kernel) chargé par le dispositif de couplage électronique 30 dans le terminal mobile 12 soit incomplète quant à l'invalidation des capacités de communication du module de radiocommunication R₁. Pour y remédier et compléter cette action, la première couche 20 du logement 14 précédemment décrite et configurée pour jouer le rôle d'un écran de protection électromagnétique permet d'inhiber, brouiller, mettre en quarantaine, ou encore dégrader les communications émises par le premier module de radiocommunication R₁ du terminal mobile 12 tout en permettant au deuxième module de radiocommunication sécurisée R₂ d'émettre correctement.

Selon un aspect particulier, une étape 82 de réception et de vérification d'au moins une donnée d'authentification de l'utilisateur saisie via une interface de saisie du terminal mobile est mise en œuvre. Pour ce faire, l'outil logiciel (kernel) chargé dans le terminal mobile 12 et le dispositif de couplage 30 du logement 14 (i.e. coque) s'échangent des informations destinées à vérifier l'intégrité de l'ensemble 10 terminal mobile 12 couplé à la coque 14 et/ou destinées à vérifier l'intégrité de son utilisateur.

Optionnellement, une telle étape de réception et vérification 82 est mise en œuvre par un module d'authentification, non représenté, du dispositif de couplage 30 propre à être connecté via la liaison 32 à l'interface homme-machine (i.e. interface de saisie et de restitution) du terminal mobile 12 lorsque le terminal mobile 12 est solidarisé au logement 14 et propre à émettre une requête d'authentification restituée via ladite interface à l'utilisateur du terminal mobile 12.

Puis selon une étape 84, une restitution est initiée par le dispositif de couplage électronique 30, via un module de restitution du terminal mobile 12, d'une information représentative de l'activation du deuxième module de radiocommunication sécurisée R₂.

Une telle information représentative de l'activation du deuxième module de radiocommunication sécurisée R₂ correspond par exemple à l'affichage du message « mode MC ».

Selon une variante, le dispositif de couplage 30 active un indicateur, par exemple un indicateur lumineux (une lumière diffusée par exemple par une led verte en mode couplé MC, orange en mode de transition MT, et rouge en mode découplé MD) ou un indicateur sonore représentatif du mode couplé MC, de transition MT ou encore du mode découplé MD.

Selon un aspect particulier, une telle étape 84 de restitution est propre à être mise en œuvre en continu dès le déclenchement de la phase 72 de couplage ou à tout autre moment durant cette phase 72 de couplage.

Préalablement, à la mise en œuvre de cette étape 84 de restitution, l'objet communicant 10 est en mode de transition MT, ce qui correspond à la période intermédiaire entre l'instant de solidarisation du terminal mobile 12 au logement 14 et l'activation effective du deuxième module de radiocommunication sécurisée R₂.

Puis, selon l'étape 86, l'activation du deuxième module de radiocommunication sécurisée R₂ est mise en œuvre. Plus précisément, le dispositif de couplage 30 du logement 14 active un mode de communication spécifique correspondant à un ensemble de fonctions de communications disponibles au sein du deuxième module de radiocommunication sécurisée R₂, ainsi que les zones mémoires associées et isolées les unes des autres.

Une telle étape 86 d'activation est, selon une variante, mise en œuvre simultanément à l'étape 84 de restitution précédemment décrite.

Un tel mode spécifique est sélectionné en fonction d'au moins un paramètre représentatif d'une utilisation prédéterminée du deuxième module de radiocommunication sécurisée, le paramètre étant préalablement stocké dans un deuxième espace mémoire, du logement 14, dédié et sécurisé accessible par le dispositif 30 de couplage électronique. Selon l'exemple des figures 2 ou 3, cet espace mémoire sécurisé correspond à l'espace mémoire du dispositif de sécurité 38 (i.e. la carte SIM), et le ou les paramètre(s) corresponde(nt) par exemple à un profil de mission inscrit dans le support de profil de la carte SIM 38 propre au logement 14.

Selon un aspect particulier une telle activation 86 du fonctionnement du deuxième module de radiocommunication sécurisée R₂ est conditionnée par le résultat de l'étape 82 de réception et de vérification d'au moins une donnée d'authentification de l'utilisateur saisie via une interface de saisie du terminal mobile.

En d'autres termes, si le résultat de l'authentification du terminal mobile 12 et/ou de son utilisateur est positif, le deuxième module de radiocommunication sécurisée R₂ est activé et dans le cas contraire le couplage électronique selon la présente invention est interrompu, avec optionnellement une étape de restitution, non représentée, d'un indicateur d'échec d'authentification.

Tant que la « mission » sécurisée de l'utilisateur est en cours le deuxième module de radiocommunication sécurisée R₂ de l'objet communicant 10 reste activé tandis que le fonctionnement du premier module de radiocommunication R₁ du terminal mobile 12 est inhibé.

Une fois cette « mission » achevée, le terminal mobile 12 est propre à être désolidarisé du logement 14 pour une utilisation « hors mission » par exemple à des fins personnelles.

Afin qu'une telle dissociation de l'objet communicant 10, en d'une part le terminal mobile 12 et d'autre part le logement 14, soit effectuée selon un processus maîtrisé, la deuxième phase 74 de préparation au découplage électronique représentée sur la figure 4 est mise en œuvre.

La deuxième phase 74 de préparation au découplage comprend tout d'abord selon l'exemple représenté sur la figure 4, une étape 88 d'émission, par le dispositif de couplage électronique 30, d'au moins une commande de suppression de toute information mémorisée par le terminal mobile 12 pendant la durée de solidarisation du terminal mobile 12 au le logement 14.

Une telle étape d'effacement 88 est, selon une variante, propre à être réitérée plusieurs fois au cours de la solidarisation du terminal 12 et du logement 14 (i.e. au cours de la mission). Selon une autre variante, l'effacement 88 est mis en œuvre uniquement une fois la mission achevée préalablement à la désolidarisation du terminal mobile 12 et du logement 14.

Par ailleurs, préalablement à la désolidarisation du terminal mobile 12 et du logement 14, une étape 90 de désactivation du deuxième module de radiocommunication sécurisée R₂ est mise en œuvre.

De plus, une étape 92 de chargement, par le dispositif de couplage électronique 30, de l'information représentative de la configuration du terminal mobile, préalablement à l'inhibition, sur le terminal mobile 12 est également mise en œuvre. Autrement dit, l'espace mémoire 66 dédié au stockage d'au moins une information représentative de la configuration du terminal mobile 12 préalablement au couplage électronique avec le logement 14 est déchargé du dispositif de couplage électronique 30 du logement 14 dans la mémoire du terminal mobile 12. En d'autres termes, le contexte initial du terminal mobile 12, préalablement à la formation de l'objet communicant 10 est rechargé dans le terminal mobile 12 lorsque celui-ci est sur le point de reprendre son cycle de vie hors mission.

Les étapes 90 de désactivation et 92 de chargement sont propres à être mises en œuvre, par le dispositif de couplage électronique 30, parallèlement ou dans un ordre quelconque, l'étape 90 de désactivation précédant (tel que représenté sur la figure 4) ou succédant à l'étape de chargement 92.

Selon un aspect particulier, une fois la phase 74 de préparation au découplage achevée, un message informant l'utilisateur que le terminal 12 est prêt pour être découplé est par exemple restitué par le dispositif de couplage 30 via l'interface de restitution du terminal mobile 12.

Selon un autre aspect particulier, tant que la phase 74 e préparation au découplage achevée, la désolidarisation du terminal mobile 12 est empêchée via un élément (non représenté) de blocage électrique et/ou mécanique du logement 14 contrôlé par le dispositif de couplage électronique 30.

Ainsi, l'utilisateur est propre à désolidariser le terminal mobile 12 en toute sécurité et retrouver ce dernier dans sa configuration initiale.

On conçoit ainsi que le procédé de couplage électronique et le dispositif électronique 30 ainsi que le logement 14 idoine permettent d'offrir une plus grande flexibilité d'utilisation d'un terminal mobile 12, par exemple d'une part dans un contexte d'utilisation personnelle (réseau PAN de l'anglais *Personal Area Network*) mais également dans un contexte d'utilisation professionnelle, par exemple d'utilisation sécurisée, dans un réseau étendu (réseau WAN de l'anglais *Wide Area Network*). L'hybridation d'utilisations est permise par le couplage entre deux éléments électroniques dédiés et présentant des cycles de vie distincts à savoir d'une part le terminal mobile 12 et d'autre part le logement 14 selon l'invention.

Le logement 14 est aisément reconfigurable en fonction de la mission sécurisée ou non à effectuer, et ce indépendamment du terminal mobile 12.

Par ailleurs, le logement 14 est préférentiellement inviolable, et l'objet communicant 10 formé, selon l'invention, par couplage du terminal mobile 12 et du logement 14 permet d'utiliser l'interface homme-machine du terminal 12 au profit de la partie communicante du logement 14. En d'autres termes, l'objet communicant 10 allie l'inviolabilité, l'autonomie et la reconfigurabilité du logement 14 avec l'ergonomie du terminal mobile 12.

Comme indiqué précédemment, le deuxième module de radiocommunication R₂ est un module de radiocommunication sécurisée, propre à échanger des données traitées selon des règles de sécurité d'information prédéterminées. L'homme du métier comprendra alors que ces données traitées selon les règles de sécurité prédéterminées sont des données protégées selon lesdites règles de sécurité.

Le deuxième module de radiocommunication R₂ contient plusieurs moyens de communication radio, distincts les uns des autres, et de préférence disjoints. Les moyens de communication radio sont propres à fonctionner en parallèle, c'est-à-dire simultanément les uns par rapport aux autres, chaque moyen de communication radio étant propre à échanger des données traitées selon des règles de sécurité d'information prédéterminées. Ces données sont alors protégées selon lesdites règles de sécurité.

## Revendications

1. Procédé (70) de couplage électronique d'un terminal mobile (12) avec un logement (14) configuré pour recevoir ledit terminal mobile (12), le terminal mobile (12) comprenant un premier module de radiocommunication (R₁), le logement (14) comprenant un deuxième module de radiocommunication (R₂) et un dispositif (30) de couplage électronique configuré pour mettre en œuvre ledit procédé (70),
le procédé (70) comprenant au moins les étapes :
- une inhibition (80) du fonctionnement du premier module de radiocommunication (R₁), l'inhibition étant activée lorsque le terminal mobile (12) est solidarisé au logement (14), et
- une activation (86) du deuxième module de radiocommunication (R₂), le deuxième module de radiocommunication (R₂) étant un module de radiocommunication sécurisée, propre à échanger des données traitées selon des règles de sécurité d'information prédéterminées, le deuxième module de radiocommunication sécurisée (R₂) comprenant différents types d'émetteurs-récepteurs dédiés (46, 47, 48, 50) de radiocommunication sécurisées,
le procédé (70) comprenant en outre une étape de sélection de l'émetteur-récepteur du deuxième module de radiocommunication sécurisée (R₂) adapté pour un mode de communication spécifique correspondant à une mission de l'utilisateur de l'objet communicant (10) issu du couplage du terminal mobile (12) et du logement (14).

2. Procédé (70) de couplage selon la revendication 1 comprenant en outre :
- une étape de sauvegarde (76), dans un premier espace mémoire (66) dédié du dispositif (30) de couplage électronique, d'au moins une information représentative de la configuration du terminal mobile (12) préalablement à l'inhibition (80) ;
- une étape d'émission (88) audit terminal mobile d'au moins une commande de suppression de toute information mémorisée par le terminal mobile pendant la durée de solidarisation du terminal mobile au logement ;
et préalablement à la désolidarisation (94) du terminal mobile (12) et du logement (14) :
- une étape de chargement (92) à partir dudit premier espace mémoire, par le dispositif (30) de couplage électronique, de ladite information représentative de la configuration du terminal mobile, préalablement à l'inhibition, sur le terminal mobile, et
- une étape de désactivation (90) du deuxième module de radiocommunication (R₂).

3. Procédé (70) de couplage selon la revendication 1 ou 2, dans lequel le procédé de couplage comprend en outre, préalablement à l'activation (86) du deuxième module de radiocommunication (R₂), une étape de chargement (78), sur le terminal mobile (12), par le dispositif (30) de couplage électronique, d'au moins un outil logiciel configuré pour :
- contrôler des données d'entrées et de sortie du terminal mobile (12) pendant l'activation du deuxième module de radiocommunication (R₂), et/ou
- contrôler l'intégrité du terminal mobile (12), et/ou
- détecter une désolidarisation du terminal mobile (12) et du logement (14).

4. Procédé (70) de couplage selon l'une quelconque des revendications précédentes dans lequel l'activation (86) du deuxième module de radiocommunication (R₂) comprend une étape d'activation d'un mode de communication associé à une mission courante d'un utilisateur du terminal mobile solidarisé au logement, le mode de communication étant sélectionné parmi une pluralité de modes de communication disponibles en fonction d'au moins un paramètre représentatif d'une utilisation prédéterminée du deuxième module de radiocommunication (R₂), ledit au moins un paramètre étant préalablement stocké dans un deuxième espace mémoire (38) dédié et sécurisé accessible par le dispositif (30) de couplage électronique.

5. Procédé (70) de couplage selon l'une quelconque des revendications précédentes, dans lequel le procédé (70) de couplage comprend en outre une étape de restitution (84) initiée par le dispositif (30) de couplage électronique, via un module de restitution du terminal mobile (12), d'une information représentative de l'activation du deuxième module de radiocommunication (R₂).

6. Dispositif (30) de couplage électronique d'un terminal mobile (12) avec un logement (14) configuré pour recevoir ledit terminal mobile (12), ledit dispositif (30) étant configuré pour mettre en œuvre le procédé (70) de couplage électronique selon l'une quelconque des revendications 1 à 5.

7. Logement (14) configuré pour recevoir un terminal mobile, ledit logement comprenant au moins un module de radiocommunication (R₂) et un dispositif (30) de couplage électronique selon la revendication 6 dans lequel le module de radiocommunication (R₂) est un module de radiocommunication sécurisée propre à échanger des données traitées selon des règles de sécurité d'information prédéterminées, le deuxième module de radiocommunication sécurisée (R2) comprenant différents types d'émetteurs-récepteurs dédiés (46, 47, 48, 50) de radiocommunication sécurisées, chaque type étant sélectionnable pour un mode de communication spécifique correspondant à une mission de l'utilisateur de l'objet communicant (10) issu du couplage du terminal mobile (12) et du logement (14).

8. Logement (14) selon la revendication 7 comprenant un écran (20) de protection électromagnétique propre à s'étendre au moins sur la plus grande surface d'accueil du terminal mobile (12).

9. Logement (14) selon l'une quelconque des revendications 7 ou 8 formé par un matériau obtenu par plasturgie nano-renforcée.

## Patentansprüche

1. Verfahren (70) zum elektronischen Koppeln eines mobilen Endgeräts (12) mit einem Gehäuse (14), das zum Aufnehmen des mobilen Endgeräts (12) eingerichtet ist, wobei das mobile Endgerät (12) ein erstes Funkkommunikationsmodul (R₁) aufweist, wobei das Gehäuse (14) ein zweites Funkkommunikationsmodul (R₂) und eine Elektronische-Kopplung-Vorrichtung (30) aufweist, die zum Implementieren des Verfahrens (70) eingerichtet ist, wobei das Verfahren (70) mindestens die Schritte aufweist:
- eine Sperrung (80) des Betriebs des ersten Funkkommunikationsmoduls (R₁), wobei die Sperrung aktiviert wird, wenn das mobile Endgerät (12) mit dem Gehäuse (14) verbunden ist, und
- eine Aktivierung (86) des zweiten Funkkommunikationsmoduls (R₂), wobei das zweite Funkkommunikationsmodul (R₂) ein sicheres Funkkommunikationsmodul ist, das geeignet ist, Daten auszutauschen, die nach vorbestimmten Informationssicherheitsregeln verarbeitet werden, wobei das zweite sichere Funkkommunikationsmodul (R₂) unterschiedliche Typen von dedizierten sicheren Funkkommunikations-Sender-Empfängern (46, 47, 48, 50) aufweist,
wobei das Verfahren (70) ferner einen Schritt der Auswahl des Sender-Empfängers des zweiten sicheren Funkkommunikationsmoduls (R₂), der für einen spezifischen Kommunikationsmodus geeignet ist, der einer Aufgabe des Benutzers des kommunizierenden Objekts (10) entspricht, die sich aus der Kopplung des mobilen Endgeräts (12) und des Gehäuses ergibt (14), aufweist.

2. Kopplungsverfahren (70) nach Anspruch 1, ferner aufweisend:
- einen Schritt des Speicherns (76), in einem ersten dedizierten Speicherplatz (66) der Elektronische-Kopplung-Vorrichtung (30), mindestens einer Information, die die Konfiguration des mobilen Endgeräts (12) vor der Sperrung (80) repräsentiert;
- einen Schritt der Übertragung (88) an das mobile Endgerät mindestens eines Befehls zum Löschen aller Information, die von dem mobilen Endgerät während des Zeitraums der Anbringung des mobilen Endgeräts an dem Gehäuse gespeichert wurde;
- Laden (92), durch die Elektronische-Kopplung-Vorrichtung (30), der Information, die für die Konfiguration des mobilen Endgerätes repräsentativ ist, vor der Sperrung, auf das mobile Endgerät, und
vor der Trennung (94) des mobilen Endgeräts (12) und des Gehäuses (14):
- einen Schritt des Ladens (92) aus dem ersten Speicherplatz durch die Elektronische-Kopplung-Vorrichtung (30) der Information, die die Konfiguration des mobilen Endgeräts (12) vor der Sperrung (80) repräsentiert, auf das mobile Endgerät und
- einen Schritt der Deaktivierung (90) des zweiten Funkkommunikationsmoduls (R₂).

3. Kopplungsverfahren (70) nach Anspruch 1 oder 2, wobei das Kopplungsverfahren ferner vor der Aktivierung (86) des zweiten Funkkommunikationsmoduls (R₂) einen Schritt des Ladens (78), auf das mobile Endgerät (12), durch die Elektronische-Kopplung-Vorrichtung (30), von mindestens einem Softwaretool aufweist, das eingerichtet ist zum:
- Überwachen von Eingangs- und Ausgangsdaten des mobilen Endgerätes (12) während der Aktivierung des zweiten Funkkommunikationsmoduls (R₂), und/oder
- Überwachen der Integrität des mobilen Endgerätes (12), und/oder
- Detektieren einer Trennung des mobilen Endgerätes (12) und des Gehäuses (14).

4. Kopplungsverfahren (70) nach einem der vorhergehenden Ansprüche, bei dem die Aktivierung (86) des zweiten Funkkommunikationsmoduls (R₂) einen Schritt der Aktivierung eines Kommunikationsmodus aufweist, der einer Aufgabe des Benutzers des mobilen Endgeräts entspricht, das mit dem Gehäuse verbunden ist, wobei der Kommunikationsmodus unter einer Mehrzahl von verfügbaren Kommunikationsmodi in Abhängigkeit von mindestens einem Parameter ausgewählt wird, der für eine vorgegebene Verwendung des zweiten Funkkommunikationsmoduls (R₂) repräsentativ ist, wobei der mindestens eine Parameter zuvor in einem zweiten dedizierten und sicheren Speicherplatz (38) gespeichert wird, auf den die Elektronische-Kopplung-Vorrichtung (30) zugreifen kann.

5. Kopplungsverfahren (70) nach einem der vorhergehenden Ansprüche, bei dem das Kopplungsverfahren (70) ferner einen von der Elektronische-Kopplung-Vorrichtung (30) initiierten Schritt zur Widerherstellung, über ein Rückgabemodul des mobilen Endgerätes (12), von einer Information aufweist, die die Aktivierung des zweiten Funkkommunikationsmoduls (R₂) repräsentiert.

6. Vorrichtung (30) zur elektronischen Kopplung eines mobilen Endgerätes (12) mit einem Gehäuse (14), das zur Aufnahme des mobilen Endgerätes (12) eingerichtet ist, wobei die Vorrichtung (30) eingerichtet ist, das Verfahren (70) zu elektronischen Kopplung nach einem der Ansprüche 1 bis 5 zu durchzuführen.

7. Gehäuse (14), das zur Aufnahme eines mobilen Endgeräts eingerichtet ist, wobei das Gehäuse mindestens ein Funkkommunikationsmodul (R₂) und eine Elektronische-Kopplung-Vorrichtung (30) nach Anspruch 6 aufweist, wobei das Funkkommunikationsmodul (R₂) ein sicheres Funkkommunikationsmodul ist, das geeignet ist, Daten auszutauschen, die nach vorbestimmten Informationssicherheitsregeln verarbeitet werden, wobei das zweite sichere Funkkommunikationsmodul (R₂) unterschiedliche Typen von dedizierten sicheren Funkkommunikations-Sender-Empfängern (46, 47, 48, 50) aufweist, wobei jeder Typ für einen spezifischen Kommunikationsmodus auswählbar ist, der einer Aufgabe des Benutzers des kommunizierenden Objekts (10) entspricht, die sich aus der Kopplung des mobilen Endgeräts (12) und des Gehäuses (14) ergibt.

8. Gehäuse (14) nach Anspruch 7, aufweisend eine elektromagnetische Schutzabschirmung (20), die dazu geeignet ist, sich zumindest über die größte Aufnahmefläche des mobilen Endgerätes (12) zu erstrecken.

9. Gehäuse (14) nach einem der Ansprüche 7 oder 8, gebildet aus einem Material, das durch nano-verstärkte Kunststoffverarbeitung erhalten wurde.

## Claims

1. Method (70) for electronically coupling a mobile terminal (12) with a housing (14) configured to receive the mobile terminal (12), the mobile terminal (12) comprising a first radio-communication module (R₁), the housing (14) comprising a second radio communication module (R₂), and an electronic coupling device (30) being configured to implement the method (70),
the method (70) comprising at least:
- inhibition (80) of the operation of the first radio-communication module (R₁), the inhibition being triggered when the mobile terminal (12) is secured to the housing (14), and
- activation (86) of the second radio-communication module (R₂), the second radio-communication module (R₂) being a secure radio-communication module that is able to exchange data that are processed according to predetermined information security rules, the second radio-communication module (R₂) comprising different types of dedicated secure radio-communication transceivers (46, 47, 48, 50),
the method (70) further comprising a step for selecting the transceiver of the second radio-communication module (R₂) adapted to the specific communication mode corresponding to a mission of the user of the communicating object (10) resulting from the coupling of the mobile terminal (12) and the housing (14).

2. Method (70) for coupling according to claim 1 further comprising:
- back-up (76) in a first dedicated memory space (66) of the electronic coupling device (30), of at least one item of information that is representative of the configuration of the mobile terminal (12) prior to the inhibition (80);
- transmission (88) of at least one command for deleting any information stored by the mobile terminal during the period of coupling of the mobile terminal to the housing;
and before separation (94) of the mobile terminal (12) from the housing (14):
- downloading (92), by the electronic coupling device (30) of the information that is representative of the configuration of the mobile terminal, prior to the inhibition, to the mobile terminal, and
- deactivation (90) of the second radio-communication module (R₂).

3. Method (70) for coupling according to claim 1 or 2, wherein the method for coupling further comprises, prior to the activation (86) of the second radio-communication module (R₂), downloading (78), to the mobile terminal (12), by the electronic coupling device (30) of at least one software tool that is configured to:
- check input and output data of the mobile terminal (12) during the activation of the second radio communication module (R₂), and/or
- check the integrity of the mobile terminal (12), and/or
- detect a separation of the mobile terminal (12) from the housing (14).

4. Method (70) for coupling according to any one of the preceding claims, wherein the activation (86) of the second radio communication module (R₂) comprises an activation of a communication mode associated to a current mission of a user of the mobile terminal secured to the housing, said communication mode being selected from a plurality of available communication modes, according to at least one parameter that is representative of a predetermined use of the second radio communication module (R₂), said at least one parameter being previously stored in a second dedicated and secure memory space (38) that is accessible by the electronic coupling device (30).

5. Method (70) for coupling according to any one of the preceding claims, wherein the method (70) for coupling further comprises a restitution (84) initiated by the electronic coupling device (30), via a restitution module of the mobile terminal (12), of information that is representative of the activation of the second radio-communication module (R₂).

6. Device (30) for electronically coupling a mobile terminal (12) with a housing (14) configured to receive the mobile terminal (12), said device (30) being configured to implement the electronic coupling method (70) according to any one of claims 1 to 5.

7. Housing (14) configured to receive a mobile terminal, said housing comprising at least one radio-communication module (R₂) and an electronic coupling device (30) according to claim 6 wherein the second radio-communication module (R₂) being a secure radio-communication module that is able to exchange data that are processed according to predetermined information security rules, the second radio-communication module (R₂) comprising different types of dedicated secure radio-communication transceivers (46, 47, 48, 50), each type being selectable for a specific communication mode corresponding to a mission of the user of the communicating object (10) resulting from the coupling of the mobile terminal (12) and the housing 14.

8. Housing (14) according to claim 7 comprising an electromagnetic shield (20) adapted to extend at least over the largest reception area of the mobile terminal (12).

9. Housing (14) according to any one of claims 7 or 8 that is formed by a material obtained by nano-reinforced plastic processing.
